**Europäisches Patentamt**

**European Patent Office**

**Office européen des brevets**

(11) Publication number : **0 467 855 A2**

# EUROPEAN PATENT APPLICATION

(21) Application number : **91810574.3**

(22) Date of filing : **15.07.91**

(51) Int. Cl.⁵ : **C09K 21/00, A62D 1/00**

(30) Priority : **15.07.90 EG 49190**

(43) Date of publication of application :
**22.01.92 Bulletin 92/04**

(84) Designated Contracting States :
**CH DE FR LI**

(71) Applicant : **Hatab, Abdul Aziz Mohammed**
**17 Al-Nasr Street**
**Mansourah (EG)**

(72) Inventor : **Hatab, Abdul Aziz Mohammed**
**17 Al-Nasr Street**
**Mansourah (EG)**

(74) Representative : **Groner, Manfred et al**
**Patentanwalts-Bureau Isler AG**
**Stampfenbachstrasse 48**
**CH-8006 Zürich (CH)**

(54) **Anti-fire material.**

(57) This anti fire material is a mixture of several constituents which prevails pronounced characteristics in preventing the spreading of fires caused intentionally or byself (self-ignitioned). Some constituents absorb heat with the subsequent decomposition without any serious effect on fire-extinguisher. Moreover, other constituents absorb heat and make a protective layer on the materials subjected to heat.

The mixture (A.F.M.) is peculiar in the treatment of natural materials (cotton - Gott - Wood - Linseed materials, robes - Tent .... etc.). Such treated materials never allow the spreading of fire which the spot subjected to heat is just blackened. Several proves have been conducted with great success and was provided to the official officers when demanded.

EP 0 467 855 A2

Jouve, 18, rue Saint-Denis, 75001 PARIS

The present invention relates to an material resistent to and preventive of the spread of fires and to a method for preparing said material and to applications of said material.

This anti fire material is a mixture of several constituents which prevails pronounced characteristics in preventing the spreading of fires caused intentionally or byself (self-ignitioned). Some constituents absorb heat with the subsequent decomposition without any serious effect on fire-extinguisher. Moreover, other constituents absorb heat and make a protective layer on the materials subjected to heat.

The mixture (A.F.M.) is peculiar in the treatment of natural materials (cotton - Gott - Wood - Linseed materials, robes - Tent .... etc.). Such treated materials never allow the spreading of fire which the spot subjected to heat is just blackened. Several proves have been conducted with great success and was provided to the official officers when demanded.

The original conception of this discovery is based on the invention composed of many chemical substances mixed togather and of peculiar heat characteristics. these substances are anti-fire and do not help in spreading fires, unharmful to the human body, ineffective on the agent material in terms of the general form or smell, thereof but strengthen and preserve them from fibre insects.

The basic conception of this mixture is composed of the following

1. Aluminium carbonides
2. Calcium carbonides
3. Sodium titraurite
4. Boric acid
5. Vinegar acid
6. Amonium chloride
7. Chinese - Cawloun
8. Sodium silica
9. Water
10. Other additives according to the material to be treated.

Peculiar characteristics of this mixture

a. Upon the decay of some of its constituents (resulting from the heat of the fire, it absorbs the excessive heat leading to fire extinguishing and the disappearance of its origin).

b. Some substances decayed in the fire re-blends with the air surrounding the fire helping to return to their nature again.

c. No harm whatsoever occurs to the firemen resisting the fire. Hence, this substance is different from other substances in the fact of the inexistance of carbon dioxide in the atmosphere surrounding the fire.

d. A substance of the mixture absorbs the fire heat also and somehow splashes, then condenses again at a higher temperature and forms a solid anti-crystalisation collection which is protective against and preventive of fire.

e. Some other additive substances highly resistant to fire and which increases the density of the mixture can be added according to the purpose for which it will be used.

f. The mixture is characterised by its utter resistance to the spread of fire due to its peculiar potentials against fire.

g. The constituents of this new mixture are characterised by their cheap price compared with other substances used for extinguishing fire.

h. The solution of the mixture is characterised by the fact that it has no smell whatsoever, whether the substances are separate, mixed, containing water, or on handling or on using them in the treatment of substances and thereof after.

i. This mixture does not rot or leave a dust effect or crust or increase the bulk of the treated substance.

j. The new mixture is characterised by its transparency in all cases; therefore having no effect on the usual external shape of the treated substances.

k. The new solution is characterised by its equivalence, in terms of P.H. near to sever which does not affect the treated substances in any harmful way later on particularly tissues as it preserves the tissues making them resistant to rot insect or other insects as well as decay in wood and ants etc.

l. This mixture is characterised by the fact that, when it is used in the treatment of inflammable substances upon the occurrence of electric shock or on throwing an inflammatory material such as petrol, kerosene, cigarette ends ... etc or upon self-ignition such as (seeds - chemicals), it changes the treated materials into coal and prevents their spread to to other substances.

m. The mixture has no harmful effect whatsoever on touching the human skin and has no side effects and it disappears on washing with water.

n. The use of the mixture does not require any advanced technology, great financial potentials, apparatuses or special equipment. Hence, it is absolutely inexpensive on utilisation and it does not require skilled manpower.

Scope of using the new mixture

The mixture is successfully used in the treatment of the following inflammable materials.

1. Tent material - thin or thick.
2. Material made of cotton - linen - wool - plant fibres and curtains.
3. Gott and sack material.
4. Carton or paste thereof.
5. Upholostery cotton and filling materials.

6. Ropes and threads.

7. Reeds and papyrus.

8. Tissues and upholestery covers of vehicles, aircraft, vessels and awnings.

9. Carpets.

10. Pressed timber and industrial wood.

11. Paper and industrial pastes thereof as well as most paper particularly the official paper, special valuable plates and impotent maps.

12. Trees and woods.

13. Cotton and fibres used in wood manufacture (Crena).

14. Tiles and insulators.

15. Fire extinguishing in general.

16. Subduing fires in general.

1. The new substance has no colour or smell.

2. Constituents are colourless and are absorbed in water.

3. Resistant to fire and prevents its spread absolutely.

4. This material is composed of many chemical substances characterised by their anti-fire quality or spread thereof.

Methods of treatment and utilisation of the mixture

1. Immersing

2. external sprinkling

3. Vaporisation of some substances (wood).

4. Including the material in industrialisation.

Treatment in conducted by cooling or heat methods according to the material to be handled.

Components required to be protected

* Chemical protection of the original mixture composition.

* Protection of the methods relating to using the new chemical mixture.

* Protection of the utilisation of the new mixture in each of the following:

1. Tent material.

2. Material made of cotton - linen - wool - plant fibres and curtains.

3. Gott and sack material.

4. Carton - paper and its industrialised pastes.

5. Cotton upholostery and filling materials.

6. Ropes and threads.

7. Reeds and papyrus.

8. Upholestery of vehicles, aircraft, vessels and awnings.

9. Carpets.

10. Natural and industrial timber, pressed wood and wood pastes made of straw and "chopped" straw.

11. All official paper, and important manuscripts.

12. Trees and woods.

13. Straw and fibres (Macrina).

14. Felt and insulators.

15. Natural leather.

16. Fire extinguishing.

17. Heat insulating tiles.

18. Sprinkling and heat insulating substances for iron.

19. All heat insulating tools while welding iron pipes as well as all types of welding.

20. Heat insulation of all buildings.

21. Extinguishing all types of fires.

22. Cotton sprinkling process.

23. Protection of all kinds of metals against fire as well as buildings.

The importance of this new mixture in our practical life is summed-up as follows:

Extinguishing fires particularly those of woods and the protection of warehouses, buildings, depots, factories and the areas wherein tents are used; as well as theatres, cinemas and stadiums in addition to the protection of goods in open places and woods wherein the speed of air togather with the increase in the oxygen help in doubling the strength of fire. On the contrary, these factors help in the strength of the mixture (A.F.M.) as when it is dry, it composes a solid anti-fire material apart from the fact that it does not contain material poisonous to human body such as (carbon dioxide).

The utilisation of this new mixture:

a. Prevents the occurrence of fire (for the protection of national wealth).

b. Its cost is far less than other materials.

c. The mixture is preventive as prevention is better than cure.

*Advantages*

Introduction

The original conception of this discovery is based on the invention composed of many chemical substances mixed together and of peculiar heat characteristics. These substances are anti-fire and do not help in spreading fires, unharmful to the human body, ineffective on the agent material in terms of the general form or smell thereof but strengthen and preserve them from tissue insects.

Advantages of this present invention can be summarised as follows:

1. The new substance has no colour or smell.

2. Constituents are colourless and are absorbed in water.

3. Resistant to fire and prevents its spread absolutely.

4. This material is composed of many chemical substances characterised by their anti-fire quality or spread thereof.

5. Upon the decay of some of its constituents (resulting from the heat of the fire, it absorbs the excessive heat leading to fire extinguishing and the disappearance of its origin).

6. Some substances decayed in the fire re-blends with the air surrounding the fire helping to return to their nature again.

7. No harm whatsoever occurs to the firemen resisting the fire. Hence, this substance is different from other substances in the fact of the inexistance of carbon dioxide in the atmosphere surrounding the fire.

8. A substance of the mixture absorbs the fire heat also and somehow splashes, then condenses again at a higher temperature and forms a solid anti-crystalisation collection which is protective against and preventive of fire.

9. Some other additives highly resistant to fire and which increase the density of the mixture can be added according to the purpose for which it will be used.

10. The mixture is characterised by its utter resistance to the spread of fire due to its peculiar potentials against fire.

11. The constituents of this new mixture are characterised by their cheap price compared with other substances used for extinguishing fire.

12. The solution of the mixture is characterised by the fact that it has no smell whatsoever, whether the substances are separate, mixed, containing water, or on handling or on using them in the treatment of substances and thereof after.

13. This mixture does not rot or leave a dust effect or crust or increase the bulk of the treated substance.

14. The new mixture is characterised by its transparency in all cases; therefore having no effect on the usual external shape of the treated substances.

15. The new solution is characterised by its equivalence, in terms of P.H. near to seven which does not affect the treated substances in any harmful way later on particularly tissues as it preserves the tissues making them resistant to rot insect or other insects as well as decay in wood and ants etc.

16. This mixture is characterised by the fact that, when it is used in the treatment of inflammable substances upon the occurrence of electric shock or on throwing an inflammatory material such as petrol, kerosene, cigarette ends ... etc or upon self-ignition such as (seeds - chemicals), the treated materials are blackened and it prevents their spread to other substances.

17. The mixture has no harmful effect whatsoever on touching the human skin and has no side effects and it disappears on washing with water.

18. The use of the mixture does not require any sophisticated technology, great financial potentials, apparatuses or special equipment. Hence, it is absolutely inexpensive on utilisation and it does not require skilled manpower.

* Chemical protection of the original mixture composition.

* Protection of the methods relating to using the new chemical mixture.

* Protection of the utilisation of the new mixture in each of the following:

    1. Tent material.

    2. Material made of cotton - linen - wool - plant fibres and curtains.

    3. Gott and sack material.

    4. Carton paper and its industrialised pastes.

    5. Cotton upholostery and filling materials.

    6. Ropes and threads.

    7. Reeds and papyrus.

    8. Upholestery of vehicles, aircraft, vessels and awnings.

    9. Carpets.

    10. Natural and industrial timber, pressed wood and wood pastes made of straw and "chopped" straw.

    11. All official paper, and important manuscripts.

    12. Trees and woods.

    13. Straw and fibres (Macrina).

    14. Felt and insulators.

    15. Natural leather.

    16. Fire extinguishing.

    17. Heat insulating tiles.

    18. Sprinkling and heat insulating materials for iron.

    19. All heat insulating tools while welding iron pipes as well as all types of welding.

    20. Heat insulation of all buildings.

    21. Extinguishing all types of fires.

    22. Cotton sprinkling process.

    23. Protection of all kinds of metals against fire as well as buildings.

**Claims**

1. Anti-fire material composed of at least two components mixed together and of peculiar heat characteristics.

2. Material according to claim 1, wherein the components are anti-fire and do not help in spreading fires.

3. Material according to claim 1 or 2, composed of at least two of the following components:

a) aluminium carbonide(s)
b) calcium carbonide(s)
c) sodium tiraurite
d) boric acid
e) vinegar acid
f) amonium chloride
g) chinese-Cawloun
h) sodium silica
i) water

4. Material according to claim 3, including other additives according to the material to be treated.

5. Material according to one of the claims 1 to 4, wherein the components are unharmful to the human body, ineffective on the agent material in terms of the general form or smell thereof but strengthen and preserve them from tissue insects.

6. Method relating to using the chemical mixture or material as claimed in any preceding claim.

7. Method for preparing an anti-fire material according to one of the claims 1 to 5, characterized by at least two of the following steps:
   A) immersing
   B) external sprinkling
   C) vaporisation of some substances (as wood)
   D) including the material in industrialisation.

8. Application of the material according to one of the claims 1 to 5 for the treatment of inflammable materials.

9. Utilization of the material or chemical mixture as claimed in any preceding claim.